# EUROPÄISCHE PATENTSCHRIFT

(11) **EP 3 930 952 B1**
(45) Veröffentlichungstag und Bekanntmachung des Hinweises auf die Patenterteilung: **14.06.2023**
(21) Anmeldenummer: 20703930.6
(22) Anmeldetag: 28.01.2020
(51) Int. Cl.: B23K 20/12, B23Q 5/04

(54) **VERFAHREN ZUM RÜHRREIBSCHWEISSEN SOWIE VORRICHTUNG HIERZU**
METHOD OF FRICTION STIR WELDING AND DEVICE THEREFOR
PROCÉDÉ DE SOUDAGE PAR FRICTION MALAXAGE ET DISPOSITIF ASSOCIÉ

(30) Priorität: 25.02.2019 AT 501452019
(43) Veröffentlichungstag der Anmeldung: 05.01.2022
(73) Patentinhaber: Stirtec GmbH, 8141 Premstätten (AT)
(72) Erfinder: FIGNER, Gunter, 8043 Graz (AT); ZALAR, Christoph, 8582 Rosental (AT)
(74) Vertreter: Wirnsberger & Lerchbaum Patentanwälte OG
(86) Internationale Anmeldenummer: PCT/AT2020/060026
(87) Internationale Veröffentlichungsnummer: WO 2020/172696

(56) Entgegenhaltungen:
- JP-A- 2001 170 782
- US-A1- 2009 039 139
- US-A1- 2015 129 637
- US-B2- 7 326 011
- ZAEH M F ET AL: "FRICTION AIR WELDING USING NC MILLING MACHINES", WELDING AND CUTTING, DVS, Bd. 3, Nr. 4, 31. Dezember 2004 (2004-12-31), Seiten 220-223, XP001229066, ISSN: 1612-3433

## Beschreibung

Die Erfindung betrifft ein Verfahren zum Rührreibschweißen mit einer Vorrichtung, wobei ein Werkzeug, welches als Rührreibschweißwerkzeug ausgebildet ist, über eine Spindel mit einer Spindelachse angetrieben wird.

Weiter betrifft die Erfindung eine Vorrichtung zum Rührreibschweißen aufweisend einen Spindelstock mit einer um eine Spindelachse rotierbaren Spindel und einem um eine Werkzeugachse durch die Spindel antreibbaren Rührreibschweißwerkzeug.

Aus dem Stand der Technik sind verschiedene derartige Verfahren und Vorrichtungen bekannt geworden. Nachteilig bei derartigen Verfahren und Vorrichtungen hat sich herausgestellt, dass ein Fügen oder Zerspanen, insbesondere ein Rührreibschweißen, wobei besonders hohe Kräfte auftreten, an schwer zugänglichen Positionen nicht oder nur mit geringer Prozesssicherheit möglich ist.

Ein Verfahren und eine Vorrichtung gemäß des Oberbegriffs der Ansprüche 1 und 8 ist beispielsweise aus der US 2015/129637 A1 bekannt.

Hier setzt die Erfindung an. Aufgabe der Erfindung ist es, ein Verfahren der eingangs genannten Art anzugeben, mit welchem entsprechende Rührreibschweißprozesse auch an unzugänglichen Positionen mit hoher Effizienz und in zuverlässiger Weise durchgeführt werden können.

Ferner soll eine Vorrichtung angegeben werden, mit welcher Rührreibschweißen mit hoher Prozesssicherheit auch an schwer zugänglichen Positionen möglich ist.

Die erste Aufgabe wird erfindungsgemäß durch ein Verfahren gemäß dem Anspruch 1 gelöst.

Im Rahmen der Erfindung wurde erkannt, dass mit Einsatz eines Adapters wie beispielsweise eines Winkelkopfes auch ein Rührreibschweißen an schwer zugänglichen

Positionen möglich ist, wenn eine auf die Spindel wirkende Kraft gemessen und das Verfahren abhängig von der an der Spindel gemessenen Kraft geregelt wird. So können dadurch Beschädigungen sowohl am Werkzeug als auch an der Spindel auf einfache Weise vermieden werden, welche insbesondere durch hohe, beim Rührreibschweißen auftretende Kräfte in Richtung der Werkzeugachse hervorgerufen werden könnten, indem zulässige Belastungen überschritten werden.

Alternativ zum Rührreibschweißen, jedoch nicht gemäß der vorliegenden Erfindung, ist das Verfahren natürlich auch für weitere Füge- oder Zerspanungsprozesse einsetzbar, insbesondere zum Bohren, Drehen oder Fräsen. Wenngleich als Adapter vorzugsweise ein Winkelkopf eingesetzt wird, mit welchem ein Winkel zwischen Spindelachse und Werkzeugachse von etwa 90° erreichbar ist, kann der Adapter grundsätzlich beliebig ausgebildet sein, um konstruktiv eine von der Spindelachse abweichende Werkzeugachse zu bilden und mit dem Werkzeug unzugängliche Positionen zu erreichen.

Üblicherweise erfolgt eine Regelung des Verfahrens derart, dass eine Vorschubrichtung, eine Vorschubgeschwindigkeit, eine über das Werkzeug aufgebrachte Normalkraft in Richtung der Werkzeugachse, eine Rotationsrichtung und eine Rotationsgeschwindigkeit des Werkzeuges zur Durchführung eines entsprechenden Prozessschrittes, beispielsweise zur Herstellung einer Schweißnaht in einem Rührreibschweißverfahren, vorgegeben werden, wonach das Verfahren entsprechend durchgeführt wird, wobei eine auf die Spindel wirkende Kraft gemessen und üblicherweise kontinuierlich mit einem Maximalwert verglichen wird, welcher beispielsweise mit einer zulässigen mechanischen Beanspruchung der Vorrichtung, insbesondere der Spindel oder des Adapters, oder des Werkzeuges korrespondiert. Wird ein Überschreiten des Maximalwertes festgestellt, wird die Vorschubgeschwindigkeit, die Normalkraft des Werkzeuges in Richtung der Werkzeugachse und/oder die Rotationsgeschwindigkeit des Werkzeuges abgeändert, bis die gemessene Kraft den Maximalwert wieder unterschreitet, gegebenenfalls bis ein weiterer, niedrigerer Schwellwert unterschritten ist. Anschließend können die Vorschubgeschwindigkeit, die Normalkraft des Werkzeuges in Richtung der Werkzeugachse und/oder die Rotationsgeschwindigkeit wieder geändert werden, bis diese Parameter wieder die vorgegebenen Werte bzw. ursprüngliche Werte vor der Überschreitung des Maximalwertes erreichen.

Günstig ist es, wenn die Regelung abhängig von der an der Spindel gemessenen Kraft und einer dem Adapter zugeordneten Maschinenkonstante geregelt wird. Über die an der Spindel gemessene Kraft kann somit mittels der Maschinenkonstante auf die am Werkzeug anliegenden Kräfte und Momente geschlossen werden. Da mit einem Winkelkopf grundsätzlich beliebige Abstände und Winkel zwischen dem Werkzeug und der Spindel möglich sind, können sich die an der Spindel und am Werkzeug auftretenden Kräfte entsprechend unterscheiden. Die Maschinenkonstante korrespondiert in der Regel mit einer Geometrie des Adapters, um am Krafteinleitungspunkt an dem am Adapter angeordneten Werkzeug wirkende Kräfte anhand von an der Spindel gemessenen Kräften zu errechnen. Über eine Umrechnung mittels der Maschinenkonstante kann somit mittelbar über die an der Spindel gemessene Kraft bzw. gemessenen Kräfte auf eine Beanspruchung des von der Spindel beabstandeten Werkzeuges rückgeschlossen werden. Dadurch können beispielsweise Kollisionen des Werkzeuges mittelbar über hohe Kräfte an der Spindel erfasst werden, obwohl am Werkzeug selbst üblicherweise keine Kraftmesseinrichtung angeordnet ist. Die Anordnung einer Kraftmesseinrichtung am Werkzeug selbst ist somit nicht erforderlich, um Beschädigungen des Werkzeuges beim Verfahren zu vermeiden.

Beschädigungen an der Spindel treten bei Verfahren des Standes der Technik häufig in einem Spindellager auf, da in der Spindel üblicherweise zwar eine Kraft in Richtung der Spindelachse, eine Spindel-Axialkraft, und eine Kraft in einer Ebene senkrecht zur Spindelachse, eine Spindel-Schubkraft, gemessen werden, jedoch bei einer Krafteinleitung an einer von der Spindel beabstandeten Position zusätzlich ein hohes Biegemoment auf die Spindel wirkt, welches die Spindellager zusätzlich belastet. Auch dieses Biegemoment kann über eine Berücksichtigung der Geometrie des Adapters bzw. einer Distanz des Krafteinleitungspunktes von der Spindel rechnerisch anhand der gemessenen Spindel-Axialkraft und der Spindel-Schubkraft ermittelt und das Verfahren auf ein entsprechendes maximales Biegemoment an der Spindel geregelt werden, um Schäden an den Spindellagern zu vermeiden.

Bevorzugt ist vorgesehen, dass an der Spindel Kräfte in mehreren Raumrichtungen gemessen werden und eine Regelung abhängig von Abständen des Werkzeuges von der Spindel in mehreren Raumrichtungen erfolgt. Beispielsweise kann eine Kraft an der Spindel in Richtung der Spindelachse oder eine Schubkraft in einer Ebene senkrecht zur Spindelachse auf ein unzulässig großes Biegemoment am bzw. in dem von der Spindel beabstandeten Werkzeug hinweisen, sodass das Verfahren abgeregelt werden muss, um Beschädigungen des Werkzeuges zu vermeiden. Über eine Messung der Spindel-Axialkraft und der Spindel-Schubkraft wird somit in der Regel auf eine Kraft am Werkzeug in Richtung der Werkzeugachse, also eine Werkzeug-Axialkraft, und eine Kraft am Werkzeug in einer Richtung senkrecht zur Werkzeugachse, also eine Werkzeug-Radialkraft, sowie eine Belastung des Werkzeuges durch Biegemomente geschlossen. Über eine entsprechende Berücksichtigung eines Abstandes des Krafteinleitungspunktes von der Spindel ist mittels der gemessenen Kräfte auch eine Bestimmung eines Momentes an der Spindel um eine Achse senkrecht zur Spindelachse möglich, um unzulässige Beanspruchungen der Spindellager zu vermeiden.

Nachdem Abstände zwischen Positionen, an welche die Kräfte an der Spindel gemessen werden, und dem Werkzeug durch den Winkelkopf und die Geometrie der Vorrichtung bekannt sind, ist eine Umrechnung der gemessenen Spindel-Kräfte, gegebenenfalls auch von gemessenen Spindel-Momenten, auf auf das Werkzeug wirkende Kräfte bzw. Momente ohne Weiteres möglich.

Eine besonders einfache Regelung ergibt sich, wenn die gemessene Kraft mit einer von einem Abstand des Werkzeuges von der Spindel abhängigen Maschinenkonstante multipliziert wird, bevor die gemessene Kraft in die Regelung eingeht. Es versteht sich, dass die Maschinenkonstante auch ein Vektorformat oder ein Matrix-Format aufweisen kann, insbesondere wenn Kräfte und gegebenenfalls Momente in mehreren Raumrichtungen gemessen werden und in die Regelung eingehen. Weiter kann die Maschinenkonstante auch während des Verfahrens geändert werden, um die Umrechnung von Spindel-Kräften auf Werkzeug-Kräfte an beispielsweise aufgrund einer Vorschubbewegung veränderlicher Abstände zwischen Werkzeug und Spindel anzupassen.

Es kann auch vorgesehen sein, dass das Verfahren zur Durchführung mit unterschiedlichen Adaptern ausgebildet ist, sodass die Maschinenkonstante bei einem Wechsel des Adapters geändert wird. Beispielsweise kann die Maschinenkonstante im Winkelkopf elektronisch eingeprägt sein, sodass die üblicherweise auf einen Spindelantrieb wirkende Regelung die Maschinenkonstante automatisch bei einem Tausch des Adapters bzw. des Winkelkopfes übernimmt und somit mit einem Wechsel des Winkelkopfes an die Geometrie bzw. mögliche maximale Belastungen des Winkelkopfes angepasst wird.

Es hat sich bewährt, dass der Adapter lösbar mit der Spindel verbunden ist und eine Kraft mittels einer am Adapter angeordneten Kraftmesseinrichtung gemessen wird. Die Kraft bzw. Kräfte in mehreren Raumrichtungen können somit an der Spindel sowohl mit einer an der Spindel selbst als auch mit einer am Winkelkopf angeordneten Kraftmesseinrichtung gemessen werden. Insbesondere wenn die Kraftmesseinrichtung direkt am Winkelkopf angeordnet ist, kann diese bereits derart konfiguriert sein, dass Ausgangssignale der Kraftmesseinrichtung, welche in die Regelung eingehen, bereits für einen Abstand des Werkzeuges von der Spindel rechnerisch korrigiert sind. Die Umrechnung der gemessenen Kraft in für die Regelung unmittelbar anwendbaren Größen erfolgt dann im Winkelkopf selbst.

Mit einem Adapter wie einem Winkelkopf können grundsätzlich beliebige Winkel zwischen der Spindelachse und der Werkzeugachse erreicht werden. Bevorzugt ist vorgesehen, dass die Werkzeugachse unter einem Winkel von 15° bis 165°, insbesondere etwa 90°, zur Spindelachse angeordnet ist. Es können dann beispielsweise

Rührreibschweißverbindungen auch an Positionen hergestellt werden, welche mit einer üblicherweise zur Aufbringung entsprechend großer Kräfte sehr massiv und groß ausgebildeten Vorrichtung nicht erreichbar wären, sowie an Flächen, welche nur einen geringen Abstand zu gegenüberliegenden Bauteilen aufweisen, sodass eine entsprechend große Vorrichtung nicht direkt über der Fläche positionierbar ist, an welcher eine Schweißnaht gebildet werden soll.

Insbesondere um entsprechende Prozesse an gegenüberliegenden Bauteilen mit geringem Abstand durchführen zu können, ist es günstig, wenn am Adapter zumindest zwei Werkzeuge, insbesondere zwei Rührreibschweißwerkzeuge, angeordnet sind und eine Regelung abhängig von der an der Spindel gemessenen Kraft und davon erfolgt, welches der Werkzeuge eingesetzt wird. Der Adapter ist dann als Winkelkopf mit zwei an gegenüberliegenden Enden angeordneten Werkzeugen ausgebildet. Weiter können die Werkzeuge auch eine gemeinsame Werkzeugachse aufweisen, welche unter einem Winkel zur Spindelachse ausgerichtet ist. Auf diese Weise können Schweißnähte mit dem

Rührreibschweißverfahren auf einfache Weise auf nahe beabstandete, gegenüberliegende Flächen aufgebracht bzw. auf entsprechend angeordnete Bauteile auf prozesssichere Weise miteinander verschweißt werden. Wenn bei der Regelung auch berücksichtigt wird, welches der beiden Werkzeuge gerade im Eingriff ist, ist sichergestellt, dass Abstände zwischen Krafteinleitungspunkt und Spindel richtig berücksichtigt und wirkende Kräfte korrekt ermittelt werden, um das Verfahren auf zulässige Belastungen hin zu regeln.

Die weitere Aufgabe wird erfindungsgemäß durch eine Vorrichtung gemäß dem Anspruch 8 gelöst.

Günstig ist es, wenn ein Kraftmesssystem zur Erfassung von Kräften in unterschiedlichen Raumrichtungen vorgesehen ist. Üblicherweise werden Schubkräfte in einer Ebene senkrecht zur Spindelachse und Kräfte in Richtung der Spindelachse an der Spindel und/oder am Spindelstock erfasst. Das Kraftmesssystem kann entweder zwischen Spindel und Spindelstock oder am Winkelkopf selbst angeordnet sein und wird in der Regel auf einen Krafteinleitungspunkt kalibriert. Üblicherweise wird bei der Regelung auch eine Drehrichtung des Werkzeuges berücksichtigt, da diese relevant in Bezug auf ein auf das Werkzeug bzw. die Spindel wirkendes Moment ist.

Bevorzugt ist vorgesehen, dass die Vorrichtung zur Regelung des Verfahrens abhängig von einem Abstand des Werkzeuges zur Spindel ausgebildet und die Regelung an veränderliche Abstände, insbesondere aufgrund unterschiedlicher Adapter, anpassbar ist. Weitere Merkmale, Vorteile und Wirkungen der Erfindung ergeben sich anhand des nachfolgend dargestellten Ausführungsbeispiels. In der Zeichnung, auf welche dabei Bezug genommen wird, zeigt:

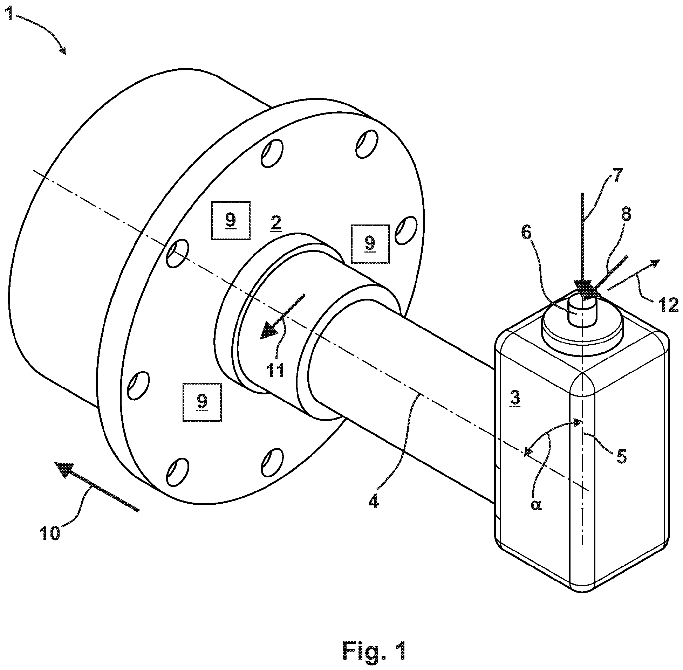

Fig. 1 eine Vorrichtung zur Durchführung eines erfindungsgemäßen Verfahrens.

Fig.1 zeigt schematisch eine erfindungsgemäße Vorrichtung 1 zur Durchführung eines erfindungsgemäßen Verfahrens in perspektivischer Darstellung, wobei die im Ausführungsbeispiel dargestellte Vorrichtung 1 zur Durchführung eines Rührreibschweißverfahrens ausgebildet ist.

Ersichtlich ist eine mit einem nicht dargestellten Motor verbundene Spindel 2, über welche ein Antrieb erfolgt, wobei die Spindel 2 über einen als Winkelkopf 3 ausgebildeten Adapter mit einem Werkzeug 6 verbunden ist, welches um eine Werkzeugachse 5 drehbar mit dem Winkelkopf 3 verbunden ist. Die Werkzeugachse 5 ist dabei unter einem Winkel α von etwa 90° zur Spindelachse 4 ausgerichtet und das Werkzeug 6 als Rührreibschweißwerkzeug ausgebildet. Ein Anpressen des Werkzeuges 6 in Richtung der Werkzeugachse 5 kann dabei durch eine Bewegung der Spindel 2 in Richtung der Werkzeugachse 5 erfolgen. Auch ein Vorschub des Werkzeuges 6 in einer Ebene senkrecht zur Werkzeugachse 5 kann durch eine entsprechende Bewegung der Spindel 2 umgesetzt werden.

Bei einem Rührreibschweißverfahren wirken auf das Werkzeug 6 hohe Kräfte, insbesondere eine Werkzeug-Axialkraft 7 aufgrund der Anpressung des Rührreibschweißwerkzeuges in Richtung der Werkzeugachse 5 an ein nicht dargestelltes Werkstück, an welchem eine Schweißnaht gebildet werden soll. Weiter wirken auf das Werkzeug 6 bei einer Bewegung entlang einer Vorschubrichtung 12 eine Werkzeug-Radialkraft 8, welche durch den Vorschub bedingt ist, und aufgrund einer Rotation des Werkzeuges 6 um die Werkzeugachse 5 ein Moment, welches das Werkzeug 6 zusätzlich auf Torsion beansprucht. Die Kräfte werden an einem Krafteinleitungspunkt an der Werkzeugspitze, mit welcher die Schweißnaht gebildet wird, in das Werkzeug 6 eingeleitet.

An der Spindel 2, also an einer vom Werkzeug 6 beabstandeten Position, sind Kraftmesseinrichtungen, beispielsweise Kraftmesssensoren 9, angeordnet, welche in Fig. 1 beispielhaft dargestellt sind und mit welchen eine Spindel-Axialkraft 10 und eine Spindel-Schubkraft 11 gemessen werden können. Die Kraftmesseinrichtungen können beispielsweise zwischen Spindel 2 und Spindelstock positioniert sein oder am Winkelkopf 3 bzw. am Adapter selbst im Bereich der Spindel 2. Um Beschädigungen des Werkzeuges 6 zu vermeiden, wird über die an der Spindel 2 angeordneten Kraftmesseinrichtungen mittelbar auf die am Werkzeug 6 wirkenden Belastungen geschlossen. Hierzu werden die an den Kraftmesseinrichtungen an der Spindel 2 gemessenen Kräfte in auf das Werkzeug 6 wirkende Kräfte umgerechnet, wobei eine Umrechnung dabei abhängig von einem Abstand des Werkzeuges 6 bzw. des Krafteinleitungspunktes von der Spindel 2, insbesondere einer Spindelnase, für welche die Kräfte und Momente an der Spindel 2 üblicherweise bekannt sind, bzw. einem Abstand der Kraftmesseinrichtungen vom Werkzeug 6 sowohl in Richtung der Spindelachse 4 als auch in Richtung der Werkzeugachse 5, gegebenenfalls auch in weiteren Raumrichtungen, erfolgt. In der Regel werden auftretende Kräfte und Momente in sämtlichen Raumrichtungen gemessen, sodass exakt auf die auf das Werkzeug 6 wirkenden Kräfte rückgeschlossen werden kann. Dadurch können insbesondere Kollisionen des Werkzeuges 6 zuverlässig erkannt und das Verfahren rechtzeitig vor einer Beschädigung des Werkzeuges 6 oder einer Beschädigung der Vorrichtung 1 abgeregelt werden. Weiter kann mit einer Berücksichtigung eines Abstandes des Krafteinleitungspunktes von der Spindelnase in der Regelung, beispielsweise über eine Maschinenkonstante, mit welcher die Spindel-Axialkraft 10 und die Spindel-Schubkraft 11 multipliziert werden, auch dann auf auf die Spindel 2 wirkende Biegemomente geschlossen werden, wenn solche Biegemomente nicht direkt erfasst werden, um eine Belastung eines Spindellagers zu ermitteln. Dadurch kann das Verfahren abgeregelt werden, wenn ein Überschreiten zulässiger Belastungen der Spindellager festgestellt wird, bevor die Spindellager beschädigt werden.

Beim Verfahren werden gemessene Kräfte kontinuierlich mit Grenzwerten verglichen, die mit maximal zulässigen Belastungen der Vorrichtung 1 und des Werkzeuges 6 korrespondieren. Die Regelung erfolgt bei Erfassen eines einen Grenzwert überschreitenden Messwertes der Kraftmesseinrichtung, indem eine Anpresskraft in Richtung der Werkzeugachse 5, eine Vorschubgeschwindigkeit in einer Ebene senkrecht zur Werkzeugachse 5 und/oder eine Rotationsgeschwindigkeit des Werkzeuges 6 um die Werkzeugachse 5 reduziert werden, bis aufgrund der an den Kraftmesseinrichtungen gemessenen Kräfte auf Belastungen an der Spindel 2 und am Werkzeug 6 innerhalb zulässiger Grenzwert geschlossen werden kann.

Mit einem erfindungsgemäßen Verfahren und einer entsprechenden Vorrichtung 1 kann ein Rührreibschweißverfahren auch an schwer zugänglichen Positionen auf effiziente Weise durchgeführt werden, wobei Beschädigungen des Rührreibschweißwerkzeuges sowie der Vorrichtung 1 zuverlässig vermieden werden können. Einerseits kann eine Kollision des Werkzeuges 6 mit einem Bauteil zuverlässig erkannt werden. Andererseits werden Schäden an der Spindel 2, insbesondere in den Spindellagern aufgrund von Biegemomenten, die durch lange Hebelarme des Winkelkopfes 3 bedingt sind, vermieden.

## Patentansprüche

1. Verfahren zum Rührreibschweißen, mit einer Vorrichtung (1), wobei ein Werkzeug (6), welches als Rührreibschweißwerkzeug ausgebildet ist, über eine Spindel (2) mit einer Spindelachse (4) angetrieben wird, wobei eine auf die Spindel (2) wirkende Kraft gemessen wird und das Verfahren abhängig von der an der Spindel (2) gemessenen Kraft geregelt wird, **dadurch gekennzeichnet, dass** zwischen der Spindel (2) und dem Werkzeug (6) ein Adapter, insbesondere ein Winkelkopf (3), angeordnet ist, sodass die Werkzeugachse (5), um welche das Werkzeug (6) rotiert, nicht mit der Spindelachse (4) zusammenfällt.

2. Verfahren nach Anspruch 1, **dadurch gekennzeichnet, dass** die Regelung abhängig von der an der Spindel (2) gemessenen Kraft und einer dem Adapter zugeordneten Maschinenkonstante geregelt wird.

3. Verfahren nach Anspruch 1 oder 2, **dadurch gekennzeichnet, dass** an der Spindel (2) Kräfte in mehreren Raumrichtungen gemessen werden und eine Regelung abhängig von Abständen des Werkzeuges (6) von der Spindel (2) in mehreren Raumrichtungen erfolgt.

4. Verfahren nach einem der Ansprüche 1 bis 3, **dadurch gekennzeichnet, dass** die gemessene Kraft mit einer von einem Abstand des Werkzeuges (6) von der Spindel (2) abhängigen Maschinenkonstante multipliziert wird, bevor die gemessene Kraft in die Regelung eingeht.

5. Verfahren nach einem der Ansprüche 1 bis 4, **dadurch gekennzeichnet, dass** der Adapter lösbar mit der Spindel (2) verbunden ist und eine Kraft mittels einer am Adapter angeordneten Kraftmesseinrichtung gemessen wird.

6. Verfahren nach einem der Ansprüche 1 bis 5, **dadurch gekennzeichnet, dass** die Werkzeugachse (5) unter einem Winkel (α) von 15° bis 165°, vorzugsweise etwa 90°, zur Spindelachse (4) angeordnet ist.

7. Verfahren nach einem der Ansprüche 1 bis 6, **dadurch gekennzeichnet, dass** am Adapter zumindest zwei Rührreibschweißwerkzeuge angeordnet sind und eine Regelung abhängig von der an der Spindel (2) gemessenen Kraft und davon erfolgt, welches Rührreibschweißwerkzeuge eingesetzt wird.

8. Vorrichtung (1) zum Rührreibschweißen, aufweisend einen Spindelstock mit einer um eine Spindelachse (4) rotierbaren Spindel (2) und einem um eine Werkzeugachse (5) durch die Spindel (2) antreibbaren Werkzeug (6), welches als Rührreibschweißwerkzeug ausgebildet ist, wobei zumindest ein Kraftsensor (9) im Bereich der Spindel (2) zur Erfassung einer auf die Spindel (2) wirkenden Kraft angeordnet ist, wobei die Vorrichtung zur Regelung eines Rührreibschweißverfahrens basierend auf der gemessenen Kraft ausgebildet ist, insbesondere zur Durchführung eines Verfahrens nach einem der Ansprüche 1 bis 7
**dadurch gekennzeichnet, dass** zwischen der Spindelachse (4) und der Werkzeugachse (5) ein Adapter, insbesondere ein Winkelkopf (3), angeordnet ist, sodass die Spindelachse (4) nicht mit der Werkzeugachse (5) zusammenfällt.

9. Vorrichtung (1) nach Anspruch 8, **dadurch gekennzeichnet, dass** ein Kraftmesssystem zur Erfassung von Kräften in unterschiedlichen Raumrichtungen vorgesehen ist.

10. Vorrichtung (1) nach Anspruch 8 oder 9, **dadurch gekennzeichnet, dass** die Vorrichtung (1) zur Regelung des Verfahrens abhängig von einem Abstand des Werkzeuges (6) zur Spindel (2) ausgebildet und die Regelung an veränderliche Abstände, insbesondere aufgrund unterschiedlicher Adapter, anpassbar ist.

## Claims

1. A method for friction stir welding using a device (1), a tool (6), which is designed as a friction stir welding tool, being driven by means of a spindle (2) with a spindle axis (4), a force acting on the spindle (2) being measured and the method being controlled depending on the force measured at the spindle (2), **characterized in that** an adapter, particularly an angled head (3), is arranged between the spindle (2) and the tool (6), so that the tool axis (5), about which the tool (6) rotates, does not coincide with the spindle axis (4).

2. The method according to Claim 1, **characterized in that** the control is controlled depending on the force measured at the spindle (2) and a machine constant, which is assigned to the adapter.

3. The method according to Claim 1 or 2, **characterized in that** forces are measured in a plurality of spatial directions at the spindle (2) and control takes place depending on distances of the tool (6) from the spindle (2) in a plurality of spatial directions.

4. The method according to one of Claims 1 to 3, **characterized in that** the measured force is multiplied by a machine constant, which is dependent on a distance of the tool (6) from the spindle (2), before the measured force enters into the control.

5. The method according to one of Claims 1 to 4, **characterized in that** the adapter is connected in a detachable manner to the spindle (2) and a force is measured by means of a force measuring device arranged on the adapter.

6. The method according to one of Claims 1 to 5, **characterized in that** the tool axis (5) is arranged at an angle (α) of 15° to 165°, preferably approximately 90°, to the spindle axis (4).

7. The method according to one of Claims 1 to 6, **characterized in that** at least two friction stir welding tools are arranged on the adapter and control takes place depending on the force measured at the spindle (2) and which friction stir welding tool is being used.

8. A device (1) for friction stir welding, having a headstock with a spindle (2), which is rotatable about a spindle axis (4), and a tool (6), which can be driven about a tool axis (5) by the spindle (2) and which is designed as a friction stir welding tool, at least one force sensor (9) being arranged in the region of the spindle (2) for detecting a force acting on the spindle (2), the device being designed for controlling a friction stir welding method based on the measured force, particularly for carrying out a method according to one of Claims 1 to 7, **characterized in that** an adapter, particularly an angled head (3), is arranged between the spindle axis (4) and tool axis (5), so that the spindle axis (4) does not coincide with the tool axis (5).

9. The device (1) according to Claim 8, **characterized in that** a force measuring system is provided for measuring forces in different spatial directions.

10. The device (1) according to Claim 8 or 9, **characterized in that** the device (1) is designed for controlling the method depending on a distance of the tool (6) from the spindle (2) and the control can be adapted to changeable distances, particularly on the basis of different adapters.

## Revendications

1. Procédé de soudage par friction malaxage, à l'aide d'un dispositif (1), un outil (6), lequel est conçu sous la forme d'un outil de soudage par friction malaxage étant entraîné par l'intermédiaire d'une broche (2) pourvue d'un axe (4) de broche, une force agissant sur la broche (2) étant mesurée et le procédé étant régulé en fonction de la force mesurée sur la broche (2), **caractérisé en ce qu'**entre la broche (2) et l'outil (6) est placé un adaptateur, notamment une tête angulaire (3), de telle sorte que l'axe (5) d'outil, autour duquel l'outil (6) est en rotation ne coïncide pas avec l'axe (4) de broche.

2. Procédé selon la revendication 1, **caractérisé en ce que** la régulation s'effectue en fonction de la force mesurée sur la broche (2) et d'une constante de machine associée à l'adaptateur.

3. Procédé selon la revendication 1 ou 2, **caractérisé en ce que** des forces sont mesurées sur la broche (2) dans plusieurs directions spatiales et **en ce qu'**une régulation s'effectue en fonction d'écarts entre l'outil (6) et la broche (2) dans plusieurs directions spatiales.

4. Procédé selon l'une quelconque des revendications 1 à 3, **caractérisé en ce que** l'on multiplie la force mesurée par une constante de machine dépendant d'un écart entre l'outil (6) et la broche (2), avant que la force mesurée ne soit impliquée dans la régulation.

5. Procédé selon l'une quelconque des revendications 1 à 4, **caractérisé en ce que** l'adaptateur est assemblé de manière amovible avec la broche (2) et l'on mesure une force au moyen d'un dispositif de mesure de la force placé sur l'adaptateur.

6. Procédé selon l'une quelconque des revendications 1 à 5, **caractérisé en ce que** l'axe (5) d'outil est placé sous un angle (α) de 15° à 165°, de préférence d'environ 90°, par rapport à l'axe (4) de broche.

7. Procédé selon l'une quelconque des revendications 1 à 6, **caractérisé en ce que** sur l'adaptateur sont placés au moins deux outils de soudage par friction malaxage et **en ce qu'**une régulation s'effectue en fonction de la force mesurée sur la broche (2) et de l'outil de soudage par friction malaxage qui est utilisé.

8. Dispositif (1) de soudage par friction malaxage, comportant une poupée porte-broche pourvue d'une broche (2) rotative autour d'un axe (4) de broche et d'un outil (6) susceptible d'être entraîné autour de l'axe (5) d'outil par la broche (2), lequel est conçu sous la forme d'un outil de soudage par friction malaxage, au moins un capteur de force (9) étant placé dans la zone de la broche (2), pour détecter une force agissant sur la broche (2), le dispositif étant conçu pour réguler un procédé de soudage par friction malaxage sur la base de la force mesurée, notamment pour réaliser un procédé selon l'une quelconque des revendications 1 à 7, **caractérisé en ce qu'**entre l'axe (4) de broche et l'axe (5) d'outil est placé un adaptateur, notamment une tête angulaire (3), de telle sorte que l'axe (4) de broche ne coïncide pas avec l'axe (5) d'outil.

9. Dispositif (1) selon la revendication 8, **caractérisé en ce qu'**il est prévu un système de mesure de la force, destiné à détecter des forces dans différentes directions spatiales.

10. Dispositif (1) selon la revendication 8 ou 9, **caractérisé en ce que** le dispositif (1) est conçu pour réguler le procédé en fonction d'un écart entre l'outil (6) et la broche (2) et **en ce que** la régulation est adaptable à des écarts variables, notamment en raison de différents adaptateurs.
